(19) Europäisches Patentamt
European Patent Office
Office européen des brevets

(11) **EP 3 367 080 A1**

(12) **EUROPEAN PATENT APPLICATION**
published in accordance with Art. 153(4) EPC

(43) Date of publication:
**29.08.2018 Bulletin 2018/35**

(51) Int Cl.:
***G01L 3/10*** (2006.01)

(21) Application number: **16857413.5**

(22) Date of filing: **18.10.2016**

(86) International application number:
**PCT/JP2016/080766**

(87) International publication number:
**WO 2017/069099 (27.04.2017 Gazette 2017/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.10.2015 JP 2015206249**

(71) Applicant: **Eagle Industry Co., Ltd.
Minato-ku
Tokyo 105-8587 (JP)**

(72) Inventors:
• **ISHII Yuichi
Tokyo 105-8587 (JP)**
• **TAKAHASHI Kazuhiro
Tokyo 105-8587 (JP)**

(74) Representative: **TBK
Bavariaring 4-6
80336 München (DE)**

(54) **CONTACTLESS METHOD FOR MEASURING TORQUE**

(57)    Provided is a contactless method for measuring torque in which: faults and abnormalities caused by exercise load do not readily occur; the number of components and amount of assembly time needed for detecting torque are reduced; malfunctions and measurement failures caused by dust, oil, dirt, etc. do not readily occur; and the need to configure a device as an airtight structure is obviated. Therefore, provided is a torque measurement method for measuring torque transmitted between a drive-side metal rotating body and a driven-side metal rotating body in a torque transmission system, wherein: a detection unit comprising an electromagnetic coil is disposed in a contactless manner adjacent to each of the metal rotating bodies, a concave-convex marker part being provided to the axial-direction end surface or to part of the circumference of each of the metal rotating bodies; electromagnetic induction is generated between the detection unit and the metal rotating bodies, and the induction load in the detection unit is measured, whereby the positions of the markers and the distance between the detection unit and the metal rotating bodies are detected; and the rotation speed and rotation phase difference of the marker parts as generated by the two metal rotating bodies in association with torque transmission are measured and computed, whereby a transmission torque value is calculated.

**FIG. 1**

EP 3 367 080 A1

**Description**

**BACKGROUND OF THE INVENTION**

**Field of the Invention**

The present invention relates to a non-contact torque measuring method for measuring magnitude of a transmission torque with a non-contact structure in a rotary torque transmission system.

**Description of the Conventional Art**

In the conventional technique, the torque is calculated by measuring an amount of strain while using a strain gauge (a strain gauge system), for example, in the case of measuring the magnitude of the transmission torque in a diaphragm coupling. In addition, there has been developed a technique of calculating the torque on the basis of a rotational phase difference by measuring rotation with an optical reading system utilizing an optical system or with a magnetic head reading system assembling a magnetic disc in a rotating part.

**PRIOR ART DOCUMENTS**

**Patent Documents**

Patent Document 1: Japanese Unexamined Utility Model Publication No. 62-155338
Patent Document 2: Japanese Unexamined Utility Model Publication No. 2-88140

**SUMMARY OF THE INVENTION**

**Problem to be Solved by the Invention**

However, the following problems are pointed out in these conventional techniques.

(1) In the strain gauge system and the magnetic head reading system, detection bodies such as the strain gauge and the magnetic disc are assembled in a rotating part of a coupling. As a result, an exercise load always acts on the detection bodies. Therefore, any failure or abnormality may be generated in the detection body since the exercise load always acts on the detection body. Further, since the number of parts and an assembling man hour of the measurement device are great in the systems, a manufacturing cost of the device is expensive.
(2) In the optical reading system, malfunction may be generated due to dust in the case that the dust is generated in a periphery of a reading part. Further, oil or a soil is attached to the reading part and it may be accordingly impossible to measure.
(3) In the magnetic head reading system, it is necessary to form the device as a sealed structure since high-speed rotation of a gear portion is dangerous.

The present invention is made by taking the above points into consideration, and an object of the present invention is to provide a non-contact torque measuring method which is hard to generate failure or abnormality due to exercise load, can reduce the number of parts and an assembling man hour necessary for torque detection, is hard to generate malfunction or impossibility of measurement due to the dust, the oil or the soil, and does not necessarily form the device as the sealed structure.

**Means for Solving the Problem**

In order to achieve the above object, a non-contact torque measuring method according to a first aspect of the present invention is a torque measuring method for measuring a torque which is transmitted between a drive side metal rotating body and a driven side metal rotating body in a torque transmission system, the method comprising the steps of adjacently arranging detection portions each constructed by an electromagnetic coil in relation to the metal rotating bodies which are provided with concavo-convex marker portions in a part on a circumference or an end surface in an axial direction in a non-contact manner, detecting a distance between the detection portions and the metal rotating bodies and positions of the marker portions by generating an electromagnetic induction between the detection portions and the metal rotating bodies, and measuring an inductive load in the detection portions, and calculating a transmission torque value by measuring a rotating speed and a rotational phase difference of the marker portions generated in both the metal rotating bodies according to the torque transmission so as to compute.

Further, a non-contact torque measuring method according to a second aspect of the present invention is the non-contact torque measuring method described in the first aspect mentioned above, wherein a position of center of gravity in a pulsed sampling data is set to a reference point for phase detection when measuring the rotational phase difference.

Further, a non-contact torque measuring method according to a third aspect of the present invention is the non-contact torque measuring method described in the first or second aspect mentioned above, wherein the drive side metal rotating body and the driven side metal rotating body are a drive side diaphragm and a driven side diaphragm in a diaphragm coupling.

The non-contact torque measuring method according to the present invention having the above structure is structured such as to (a) measure a minute concavity and convexity (marker portion) of the metal rotating body in a non-contact manner by measuring the distance of the electromagnetic induction system, (b) detect the concavity and convexity (marker portion) provided on an outer peripheral surface or an end surface of the metal rotating body (a diaphragm), and (c) detect the phase difference of the pulses generated from two rotating bodies on the basis of the detection of the concavity and convexity (marker portion) and measure the torque.

**Effect of the Invention**

The present invention achieves the following effects.

More specifically, according to the present invention, the concavo-convex marker portion is attached to the metal rotating body and the detection body such as the strain gauge or the magnetic disc is not assembled. As a result, the failure or the abnormality is not generated in the detection body due to the rotational load. Further, it is possible to widely reduce the number of parts and the assembling man hour which are necessary for detecting the torque. Further, since the concavo-convex marker portion can be formed minute, the structure becomes simple, and is not necessarily formed as the sealed structure. Further, freedom for arranging the detection portions is increased. Furthermore, since the distance to the surface of the metal rotating body is measured, the malfunction or the impossible measurement is hard to be generated due to the dust the oil or the soil.

**BRIEF EXPLANATION OF THE DRAWINGS**

Fig. 1 is an explanatory view of a diaphragm coupling which is a subject to be measured in a non-contact torque measuring method according to an embodiment of the present invention and an explanatory view of a non-contact torque measuring device;
Fig. 2 is an explanatory view showing an inductive load waveform;
Fig. 3 is an explanatory view showing an output waveform at the rotating time with no load and low speed;
Fig. 4 is an explanatory view showing an output waveform at the rotating time with load and high speed;
Fig. 5A is an explanatory view showing an actually measured data of a marker portion;
Fig. 5B is an explanatory view showing a reference point for a cycle calculation;
Fig. 6A is an explanatory view showing a sampling data of the marker portion;
Fig. 6B is an explanatory view showing a difference data of subject to be calculated;
Fig. 7 is an explanatory view showing a position of center of gravity of the sampling time; and
Fig. 8 is an explanatory view showing a variable threshold.

**DETAILED DESCRIPTION OF PREFERRED EMBODIMENTS**

Next, a description will be given of an embodiment according to the present invention with reference to the accompanying drawings.

A non-contact torque measuring method according to the embodiment is structured such as to measure magnitude of a transmission torque which is transmitted between a drive side diaphragm (a drive side metal rotating body) and a driven side diaphragm (a driven side metal rotating body) in a diaphragm coupling as a torque transmission system.

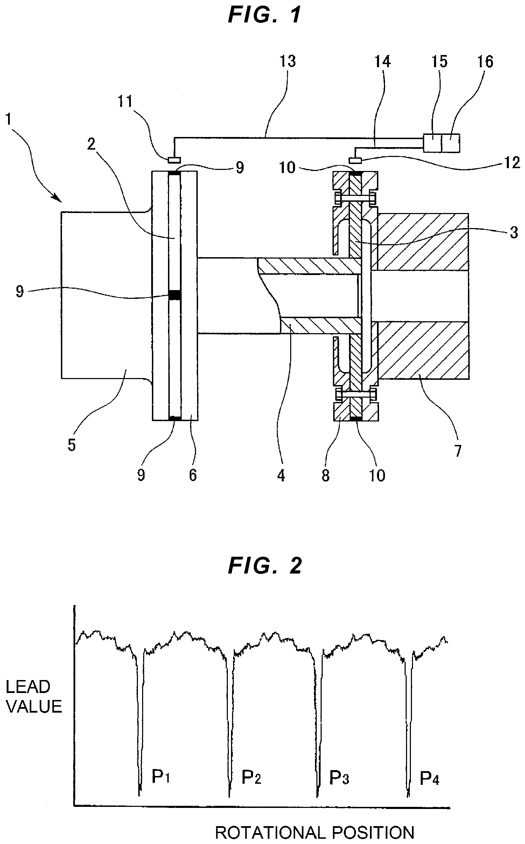

As shown in Fig. 1, a diaphragm coupling 1 is formed by coupling a drive side diaphragm 2 and a driven side diaphragm 3 via a center tube 4, and transmits the torque from the drive side diaphragm 2 to the driven side diaphragm 3 via the center tube 4. The drive side diaphragm 2 is sandwiched between a drive side flange 5 and a guard 6, and the drive side flange 5 is connected to a rotating shaft (not shown) in a drive side. The driven side diaphragm 3 is sandwiched between a driven side flange 7 and a guard 8, and the driven side flange 7 is connected to a rotating shaft (not shown) in a driven side. Each of the drive side diaphragm 2 and the driven side diaphragm 3 is made of a metal material having a conductive property.

As a peculiar structure to the present invention in the diaphragm coupling 1 mentioned above, circumferentially partial concavo-convex marker portions 9 and 10 are provided respectively in an outer peripheral portion (an outer peripheral surface or an end surface in an axial direction) of the drive side diaphragm 2 and an outer peripheral portion (an outer peripheral surface or an end surface in an axial direction) of the driven side diaphragm 3 so as to be aligned their circumferential positions (if an amount of misalignment of the concavo-convex marker portions 9 and 10 is previously known, it is not necessary to align circumferentially). As a specific example of the concavo-convex marker portions 9 and 10, a circumferentially partial concave portion is formed by a cutting process, and a circumferentially partial convex portion may be formed by applying a stainless seal having a thickness between about 0.1 and 0.2 mm to an outer peripheral portion of each of the diaphragms 2 and 3, for example.

Fig. 1 also shows a structure of a non-contact torque measuring device which is attached to the diaphragm coupling 1 mentioned above.

As mentioned above, the circumferentially partial concavo-convex marker portions 9 and 10 are respectively provided in the outer peripheral portion of the drive side diaphragm 2 and the outer peripheral portion of the driven side diaphragm 3 so as to be aligned circumferentially, and detection portions 11 and 12 each constructed by an electromagnetic coil are arranged in a non-contact manner at positions which are away from each other at a fixed distance in an outer peripheral side of each of the diaphragms 2 and 3. The detection portions (coils) 11 and 12 are connected to an inductive load sensor main body 15 and a measurement MPU 16 via cables 13 and 14. The inductive load sensor main body 15 oscillates the detection portions (coils) 11 and 12, and measures a distance between the detection portions (coils) 11 and 12 and the diaphragms 2 and 3 on the basis of a load fluctuation thereof. The distance between the detection portions (coils) 11 and 12 and the diaphragms 2 and 3 is changed in the concavo-convex marker portions 9 and 10 in comparison with the other portions to which a concavo-convex process is not applied. As a result, the concavo-convex marker portions 9 and 10 serve as a marker for detecting rotation. An inexpensive PCB pattern coil can be used as the detection portions (coils) 11 and 12.

Next, a description will be given of a torque calculating method on the basis of the measurement of distance mentioned above.

When rotating, an output waveform of the inductive load fluctuation of the detection portions (coils) 11 and 12 comes to, for example, as shown in Fig. 2. Since this example shows a waveform data which is actually measured when the concaving process is carried out in place of the convexing process as the concavo-convex marker portions 9 and 10, a load value is extremely lowered at positions P1 to P4 of the markers 9 and 10.

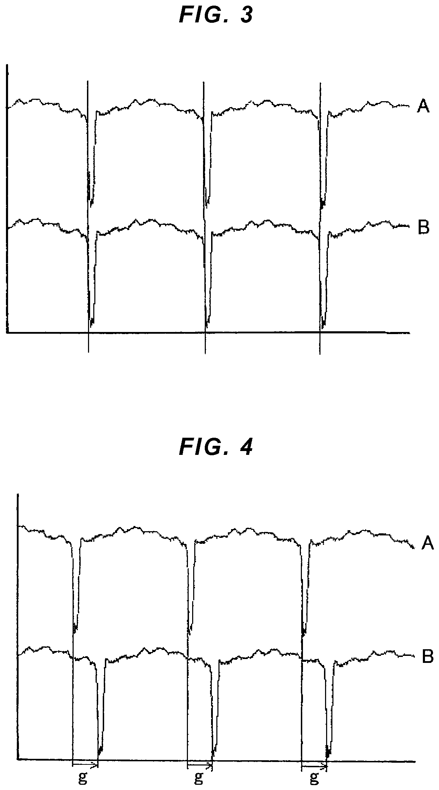

The detection portions (coils) 11 and 12 adjacently arranged in a non-contact manner in relation to both the diaphragms 2 and 3 appropriately adjust so that phases of both the detection portions (coils) 11 and 12 are aligned as shown in Fig. 3 at the no-load time or the low-speed rotating time. The adjustment is mechanically carried out, or is carried out on an electric circuit or on software. In the drawing, a line A indicates the detection portion 11 in the drive side and a line B indicates the detection portion 12 in the driven side.

Since the center tube 4 is twisted when the load is applied, the output phases in both sides are misaligned as shown in Fig. 4 (misalignment is indicated by reference symbol g). Therefore, a value of the transmission torque is determined by detecting the phase difference and carrying out a computing process with the measurement MPU 16 on the basis of the rotating speed and the phase difference.

The concavo-convex marker portions 9 and 10 may be provided in the flanges 5 and 7 or the guards 6 and 8 which are bonded to the diaphragms 2 and 3, in place of the diaphragms 2 and 3.

Further, the measuring method according to the present invention is effective in the case of measuring the torque in the drive side and the driven side of two metal rotating bodies and the circular column connecting them, without being limited to the diaphragm coupling.

Further, in the case of detecting the phase difference mentioned above, it is effective to employ the following method.

1. Detection of center of gravity

(1) Outline

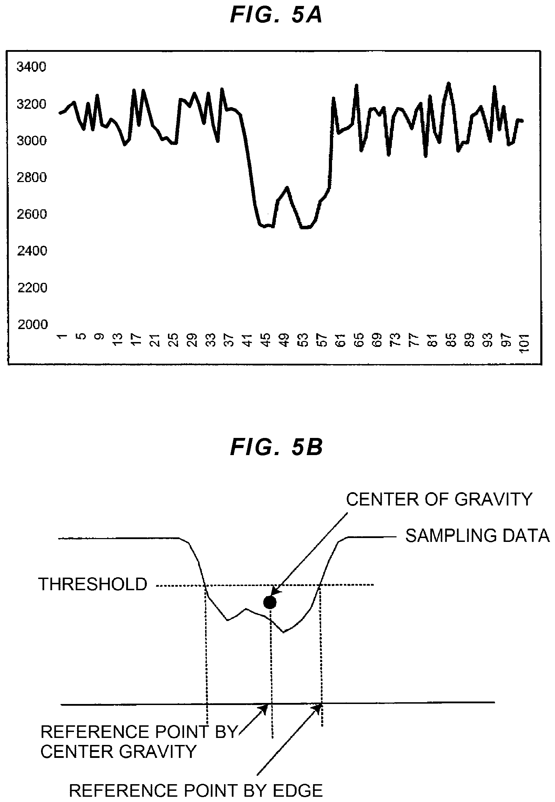

As shown in Figs. 5A and 5B, according to the reference point calculating method for the conventional cycle calculation, the method pulses the data of the marker portion and sets the position of the rising edge where the rising of the sampling data and the threshold (the threshold value) intersect to the reference point for phase detection (the reference point achieved by the edge). However, the method takes a look at only whether the sampling data is greater or smaller than the threshold and does not take into consideration a quantitative change of the sampling data. On the contrary, it is possible to take into consideration the quantitative change of the sampling data and improve the precision for detecting the reference point, by setting the position of the center of gravity to the reference point for detecting the phase (the reference point achieved by the center of gravity) as shown in Fig. 5B, in place of the position of the rising edge mentioned above.

(2) Realizing method

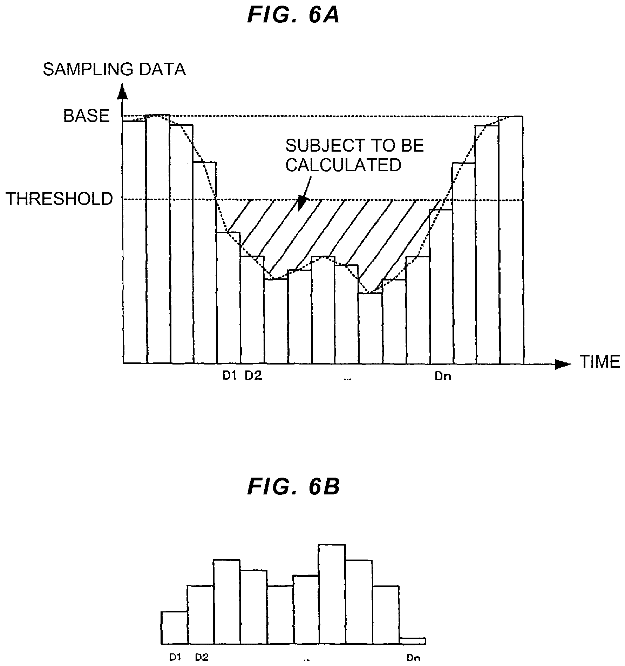

As shown in Fig. 6A, the center of gravity is determined by setting the sampling data indicating the value which is equal to or less than the threshold to the data of subject to be calculated. First of all, the method determines a total of the data of subject to be calculated, sequentially subtracts each of the data of subject to be calculated from one half of the total data, and sets the data of subject to be calculated at the timing when the result of subtraction is equal to or less than 0 to the sampling data including the center of gravity. Next, the method determines the position within the sampling time from a rate between the sampling data including the center of gravity and a residual value so as to set to the center of gravity. The threshold used for calculating the center of gravity is a threshold which is decided by a variable threshold described later. One sampling time is set to an optimal time on the basis of a used condition such as a rotating speed.

More specifically, the values of the sampling data to be calculated are first of all summed. For this summing, the method calculates the difference data of subject to be calculated obtained by subtracting the data of subject to be calculated from the threshold every data of subject to be calculated, and sums the difference data of subject to be calculated, as shown in Fig. 6B.

Difference data of subject to be calculated: $Dx$ = threshold - sampling data

[Mathematical expression 1]

$$\text{Total} : S = \sum_{k=1}^{n} Dk$$

Next, the method sequentially subtracts each of the difference data of subject to be calculated from one half of the total data mentioned above from the beginning, and sets the point where the result of subtraction is equal to or less than 0 to the sampling data where the center of gravity exists.

$$S/2 - D1 = S1$$

$$S1 - D2 = S2$$

$$S2 - D3 = S3$$

The process is repeated thereafter until the result of subtraction becomes equal to or less than 0.

Next, the method calculates the center of gravity on the basis of the rate between the sampling data at the position of the center of gravity mentioned above and the residual value, and decides the position of the center of gravity in relation to the sampling time.

Sampling data where center of gravity exists when difference becomes equal to or less than 0: $Dx$
Residual value: $Sx$
Sampling time: $T$

$$\text{Center of gravity} = Sx/Dx * T$$

For example, in the case of $Dx = 1000$, $Sx = 200$ and $T = 75$,

$$\text{Center of gravity} = 200/1000 * 75 = 15$$

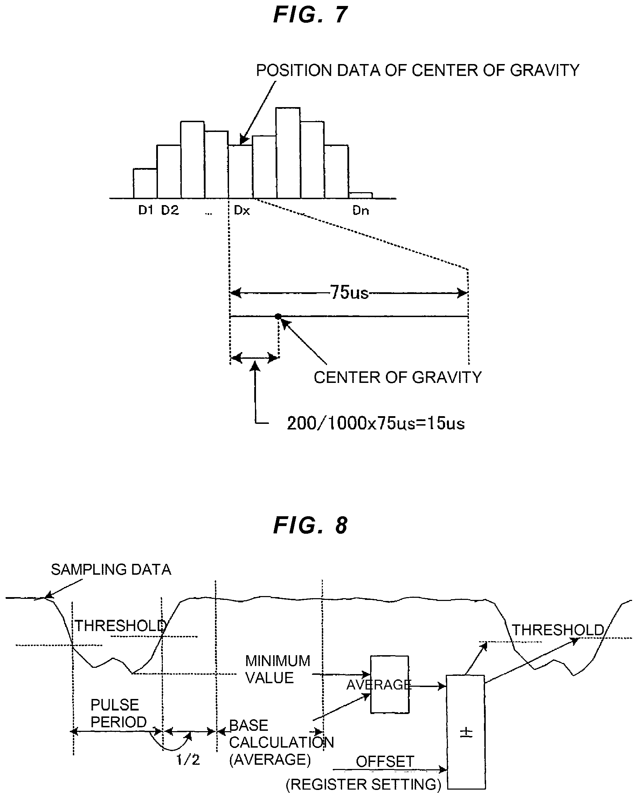

Accordingly, the center of gravity is determined at the position of 15us among 75us of the position data of the center of gravity, as shown in Fig. 7.

2. Variable threshold

(1) Outline

In the conventional method, the user of the device decides the threshold and sets it in the register, however, in the case that any eccentricity is generated by the rotation or in the case that any displacement exists in the axial direction, it is expected that the base value of the center data fluctuates, and the set threshold value deflects from the appropriate condition. Consequently, the precision for pulsing can be improved by automatically deciding the optimal threshold while reflecting the current base value.

(2) Realizing method

The method determines the threshold in relation to the next pulse or its own pulse after one rotation on the basis of the current pulse. More specifically, the method first of all maintains the minimum value of the pulse period as shown in Fig. 8. Next, the method waits for one half time of the pulse period after the end of the pulse period. The method determines the base value on the basis of an average of the sampling data after time elapse. Next, the method calculates the threshold on the basis of the average of the minimum value and the base value. According to the method, it is possible to give an offset to the trailing and rising thresholds by the register setting. The average number of the base value is set to the sampling data number for the pulse period.

**Description of Reference Numerals**

    1 diaphragm coupling
    2 drive side diaphragm (drive side metal rotating body)
    3 driven side diaphragm (driven side metal rotating body)
    4 center tube
    5, 7 flange
    6, 8 guard
    9, 10 concavo-convex marker portion
    11, 12 detection portion (coil)
    13, 14 cable
    15 inductive load sensor main body
    16 measurement MPU

**Claims**

1. A non-contact torque measuring method for measuring a torque which is transmitted between a drive side metal rotating body and a driven side metal rotating body in a torque transmission system, the method comprising the steps of:

    adjacently arranging detection portions each constructed by an electromagnetic coil in relation to the metal rotating bodies which are provided with concavo-convex marker portions in a part on a circumference or an end surface in an axial direction in a non-contact manner;
    detecting a distance between the detection portions and the metal rotating bodies and positions of the marker portions by generating an electromagnetic induction between the detection portions and the metal rotating bodies, and measuring an inductive load in the detection portions; and
    calculating a transmission torque value by measuring a rotating speed and a rotational phase difference of the marker portions generated in both the metal rotating bodies according to the torque transmission so as to compute.

2. The non-contact torque measuring method according to claim 1, wherein a position of center of gravity in a pulsed sampling data is set to a reference point for phase detection when measuring the rotational phase difference.

3. The non-contact torque measuring method according to claim 1 or 2, wherein the drive side metal rotating body and the driven side metal rotating body are a drive side diaphragm and a driven side diaphragm in a diaphragm coupling.

## FIG. 1

## FIG. 2

LEAD
VALUE

ROTATIONAL POSITION

## FIG. 3

## FIG. 4

## FIG. 5A

## FIG. 5B

## FIG. 6A

SAMPLING DATA

BASE

SUBJECT TO BE
CALCULATED

THRESHOLD

D1 D2 ... Dn

TIME

## FIG. 6B

D1 D2 .. Dn

## FIG. 7

POSITION DATA OF CENTER OF GRAVITY

D1 D2 ... Dx Dn

75us

CENTER OF GRAVITY

200/1000x75us=15us

## FIG. 8

SAMPLING DATA

THRESHOLD

THRESHOLD

MINIMUM
VALUE

AVERAGE

PULSE
PERIOD

1/2

BASE
CALCULATION
(AVERAGE)

OFFSET

(REGISTER SETTING)

±

## INTERNATIONAL SEARCH REPORT

| International application No. |
| --- |
| PCT/JP2016/080766 |

**A. CLASSIFICATION OF SUBJECT MATTER**
*G01L3/10*(2006.01)i

According to International Patent Classification (IPC) or to both national classification and IPC

**B. FIELDS SEARCHED**

Minimum documentation searched (classification system followed by classification symbols)
G01L3/10, G01D5/244, G01B7/30

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 098677/1986(Laid-open No. 006331/1988) (Kawasaki Heavy Industries, Ltd.), 16 January 1988 (16.01.1988), specification, pages 1 to 4; figures (Family: none) | 1-3 |
| Y | Microfilm of the specification and drawings annexed to the request of Japanese Utility Model Application No. 173084/1975(Laid-open No. 085471/1977) (Mitsubishi Heavy Industries, Ltd.), 25 June 1977 (25.06.1977), specification, pages 1 to 5; fig. 1 to 2 (Family: none) | 1-3 |

☒  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 November 2016 (14.11.16) | 22 November 2016 (22.11.16) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/080766 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3-078635 A  (John Kirby),<br>03 April 1991 (03.04.1991),<br>page 2, upper right column to page 3, lower<br>right column; fig. 1<br>& US 5215154 A<br>columns 1 to 4; fig. 1<br>& EP 412780 A2          & GB 2234827 A<br>& PT 94965 A            & IE 902863 A1 | 1-3 |
| Y | JP 2006-003310 A  (Tokyo Gas Co., Ltd.),<br>05 January 2006 (05.01.2006),<br>paragraphs [0125] to [0130]; fig. 11 to 12<br>(Family: none) | 2-3 |
| Y | US 2010/0296075 A1  (LEICA GEOSYSTEMS AG),<br>25 November 2010 (25.11.2010),<br>paragraph [0062]<br>& US 2012/0300191 A1    & WO 2009/053085 A1<br>& EP 2053353 A1         & EP 2201330 A1<br>& AU 2008315635 A1      & CA 2703620 A1<br>& CN 101836077 A        & AT 514919 T | 2-3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62155338 A

- JP 2088140 A